(19) **Europäisches Patentamt**

**European Patent Office**

**Office européen des brevets**

(11) **EP 0 365 826 B2**

(12) ## NEUE EUROPÄISCHE PATENTSCHRIFT

(45) Veröffentlichungstag und Bekanntmachung des Hinweises auf die Entscheidung über den Einspruch:
**12.06.1996 Patentblatt 1996/24**

(51) Int. Cl.⁶: **B28B 1/52**, B28B 3/12, C04B 14/38

(45) Hinweis auf die Patenterteilung:
**21.04.1993 Patentblatt 1993/16**

(21) Anmeldenummer: **89117447.6**

(22) Anmeldetag: **21.09.1989**

(54) **Verfahren und Vorrichtung zur Herstellung von Mineralfaserplatten**

Process and device for the production of mineral-fibre boards

Procédé et dispositif pour la production de panneaux à base de fibres minérales

(84) Benannte Vertragsstaaten:
**AT BE CH DE FR GB GR IT LI LU NL SE**

(30) Priorität: **27.09.1988 DE 3832773**

(43) Veröffentlichungstag der Anmeldung:
**02.05.1990 Patentblatt 1990/18**

(73) Patentinhaber: **RADEX-HERAKLITH INDUSTRIEBETEILIGUNGS AKTIENGESELLSCHAFT**
**9545 Radenthein (AT)**

(72) Erfinder:
* **Neuhold, Heimo**
**A-9523 Landskron (AT)**
* **Wieltschnig, Josef**
**A-9702 Ferndorf 149 (AT)**

(74) Vertreter: **Becker, Thomas, Dr., Dipl.-Ing. et al**
**Patentanwälte Becker und Müller**
**Eisenhüttenstrasse 2**
**40882 Ratingen (DE)**

(56) Entgegenhaltungen:

| | |
|---|---|
| EP-A- 0 133 083 | CH-A- 620 861 |
| DE-A- 1 635 620 | DE-C- 1 244 704 |
| US-A- 2 409 066 | US-A- 4 567 078 |

EP 0 365 826 B2

## Beschreibung

Die Erfindung betrifft eine Vorrichtung zum Herstellen von Mineralfaserplatten nach dem Oberbegriff des Anspruches 1.

Die CH-A-620 861 beschreibt ein Verfahren zur Herstellung von Mineralfaserplatten, bei dem die Mineralfaserlage bei Eintritt in den Durchlaufofen wechselseitig ausgebaucht und dann in ihrer Dicke derart komprimiert wird, daß sie nach der Aushärtung eine praktisch ebene Oberfläche aufweist. Zur Durchführung dieses Verfahrens weist die bekannte Vorrichtung einen führungslosen Abschnitt zwischen einer Vorpresse und einer zweiten Fördereinrichtung auf, der so bemessen ist, daß ein regelmäßiges wechselseitiges Ausbauchen der Mineralfaserlage erfolgt.

Dadurch soll erreicht werden, daß viele Fasern innerhalb der Lage in einem Winkel zur Plattenoberfläche zu liegen kommen. Diese Ausrichtung soll auch dann bestehen bleiben, wenn die Mineralfaserlage noch in ihrer Dicke derart komprimiert wird, daß sie nach der Aushärtung eine Draktisch ebene Oberfläche aufweist. Dadurch sollen die Druckfestigkeit und die Zerreißfestigkeit der fertigen Platte quer zur Plattenebene höher sein als bei Planen, die mit zuvor bekannten Verfahren hergestellt worden sind.

Es hat sich jedoch gezeigt, daß bei Verwendung unterschiedlicher Arten von Mineralfasern und zur Herstellung von unterschiedlichen Produkttypen das bekannte Verfahren und die zugehörige Vorrichtung nicht immer zufriedenstellende Ergebnisse liefern, da die Ausbauchung nach der Vorkomprimierung der Mineralfaserlage relativ abrupt im Eintrittsbereich des Durchlaufofens durchgeführt wird.

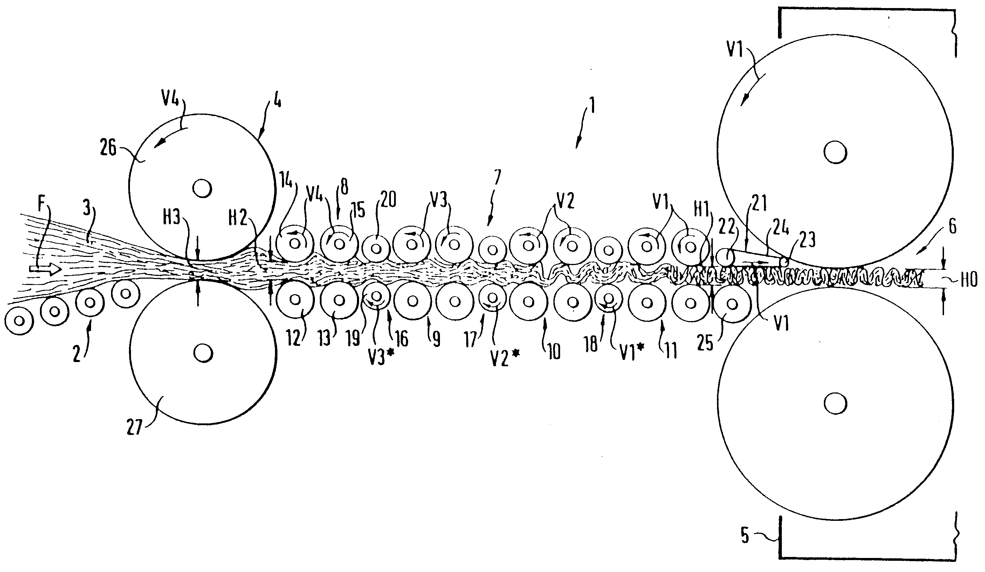

Die E-A1-0 133 083 offenbart ein Verfahren zur Herstellung von Mineralfaserplatten, bei dem die Mineralfaserlage wenigstens zwei Längskomprimierungsvorgängen unterworfen wird, deren Kompressionsgrad, d.h. das Verhältnis zwischen Fasermasse pro Flächeneinheit nach und vor den Komprimierungsvorgängen, auf einen Wert begrenzt wird, der geringer ist als derjenige, bei dem sich die Flächenausbildung der Mineralfaserlage beeinflussende Falten bilden würden. Dabei zeigt die Fig. 2 der E-A1-0 133 083 eine Mineralfaserlage mit einer Faltenausbildung, die gerade vermieden werden soll, während in Fig. 3 das mit dem beschriebenen Verfahren erreichte Ergebnis dargestellt ist, das dahingehend umschrieben werden kann, daß eine Mineralfaserplatte mit isotrop orientierten Fasern hergestellt wird, bei der die Faserorientierung keine bevorzugte Raumrichtung aufweist.

Die US 4,567,078 A beschreibt eine Vorrichtung zur Herstellung von Fasermatten mit einer Einrichtung zur Imprägnierung der Matte und verschiedenen, folgenden Fördereinheiten, die aus Transportbändern bestehen, zwischen denen eine Glasfaserlage transportiert wird. Im Übergangsbereich zwischen benachbarten Fördereinheiten sind Führungsmittel für die Faserlage vorgesehen. Diese bestehen entweder aus frei drehbaren Rollen. In diesem Fall besteht die Gefahr, daß die Faserlage seitlich "auswandert". Oder sie bestehen aus Rollen, die mit der Geschwindigkeit der folgenden Fördereinheit fest angetrieben werden. In diesem Fall sind die Rollen als Bestandteil der folgenden Fördereinheit anzusehen. Gemäß Spalte 12, Zeilen 11-16 erfolgt ein Ausbauchen der Faserlage überwiegend zwischen den ersten Förderbändern, und dort vor allem am austragsseitigen Ende.

Es ist das der Erfindung zugrundeliegende technische Problem, eine Vorrichtung gemäß Oberbegriff des Anspruches 1 zu schaffen, welche die Herstellung von Mineralfaserplatten mit praktisch gleichbleibender Qualität und hoher Zugfestigkeit und Abreißfestigkeit auch bei Verwendung unterschiedlicher Arten von Mineralfasern ermöglicht.

Die Lösung dieser Aufgabe erfolgt durch die Merkmale des Anspruches 1.

Mit der erfindungsgemäßen Vorrichtung werden eine allmähliche Ausbauchung der Mineralfaserlage und damit eine allmähliche Längskomprimierung erreicht, was zu einer Vergleichmäßigung der Anordnung der Fasern innerhalb der Lage führt. Dies wiederum ergibt eine Stabilisierung der Faseranordnung, die auch beim Aushärten im Durchlaufofen und bei einem nochmaligen Komprimieren auf die endgültige Dicke nicht erheblich verändert wird. Hieraus wiederum resultiert eine hohe Zusammendrückbarkeit und Abreißfestigkeit im Zusammennang mit einer honen Zugfestigkeit. Dadurch wird es möglich, Platten zu erzeugen, die bei gleichbleibender Dichte wesentlich höhere Druck- und Abreißfestigkeiten erzielen, als die bekannten Produkte.

Die Ansprüche 2 bis 10 haben vorteilhafte Weiterbildungen der erfindungsgemäßen Vorrichtung zum Inhalt.

Ist der Kompressionsgrad jeder Stufe individuell einstellbar, kann eine optimale Anpassung an unterschiedliche Produkttypen erreicht werden.

Eine Fixierung der Mineralfaserlage zwischen der letzten Stufe und dem Ofeneinlauf ergibt insofern Vorteile, als die ausgebauchte Anordnung der Faser innerhalb der Lage beim Einlauf in den Ofen nicht gestört wird, so daß die gewünschte Ausrichtung sicher aufrechterhalten werden kann.

Durch die Vorkomprimierung der Mineralfaserlage etwa auf die Nenndicke der Mineralfaserplatte ergibt sich der Vorteil, daß die endgültige Dickenkomprimierung die erreichte Ausrichtung der Fasern praktisch nicht beeinflußt, da lediglich eine geringe Kompression erforderlich ist, um das Endprodukt in der gewünschten Qualität zu erzeugen, d.h. insbesondere ebene Oberflächen zu erzielen.

Besondere vorrichtungstechnische Vorteile ergeben sich aus der sehr exakten Steuerbarkeit und der hohen Qualität des Produktes aufgrund der gleichen Abstände zwischen den komprimierungselementen. Ferner wird durch das Vorsehen von Zwischenstufen die allmähliche Längskomprimierung weiter vergleichmäßigt, da die Zwischenstufen einen störungsfreien Übergang der allmählich von Komprimierungsstufe zu komprimierungsstufe ausgebauchten Mineralfaserlage erleichtert.

Weitere Einzelheiten, Merkmale und Vorteile der Erfindung ergeben sich aus nachfolgender Beschreibung eines Ausführungsbeispiels der erfindungsgemäßen Vorrichtung anhand der einzigen Figur der Zeichnung, die eine schematisch vereinfachte Darstellung beinhaltet.

In der Figur ist eine Vorrichtung 1 zum Herstellen von Mineralfaserplatten dargestellt, die eine erste Fördereinrichtung 2 zur Förderung einer Lage 3 von Mineralfasern aufweist. In Förderrichtung F gesehen nach der Fördereinrichtung 2 ist eine Vorpresse 4 zur Dickenvorkomprimierung der Lage 3 vorgesehen. Ferner weist die Vorrichtung 1 einen Durchlaufofen 5 und eine zweite Fördereinrichtung 6 zum Transport der Lage 3 durch den Durchlaufofen 5 auf. Schließlich ist eine Einrichtung 7 zur Längskomprimierung der Lage 3 durch wechselseitiges Ausbauchen vorgesehen. Wie die Figur verdeutlicht, ist die Einrichtung 7 zur Längskomprimierung erfindungsgemäß zwischen der Vorpresse 4 und dem Durchlaufofen 5 angeordnet und weist eine Mehrzahl von Komprimierungsstufen 8 bis 11 auf. Diese komprimierungsstufen 8 bis 11 sind in Förderrichtung F gesehen hintereinander angeordnet. Obwohl bei der in der Figur dargestellten Ausführungsform der Vorrichtung 1 vier Komprimierungsstufen 8 bis 11 vorgesenen sind, ist diese Zahl nicht zwingend, sondern kann je nach Bedarf auch abgeändert werden.

Ferner sind im Beispielsfalle die Komprimierungsstufen 8 bis 11 jeweils gleich ausgebildet, so daß nachfolgend am Beispiel der Komprimierungsstufe 8 deren Aufbau näher erläutert wird. So weist die Komprimierungsstufe 8 Komprimierungselemente 12 bis 15 auf, die in einem gewissen Abstand voneinander angeordnet sind. Dieser Abstand der Komprimierungselemente 12 bis 15 ist von Komprimierungsstufe zu Komprimierungsstufe annähernd gleich. Ferner verdeutlicht die Figur, daß im Beispielsfalle die Komprimierungselemente als Rollen ausgebildet sind. Es ist jedoch auch möglich, die komprimierungselemente 12 bis 15 als Förderbänder auszubilden. Ferner ist nicht unbedingt eine Anordnung einer Mehrzahl von derartigen paarweise zusammengefaßten Komprimierungselementen 12 bis 15 erforderlich. Dies bedeutet, daß beispielsweise auch lediglich ein Paar (z.B. Elemente 12 und 14) je Komprimierungsstufe vorgesehen sein könnte.

Die Komprimierungselemente der Komprimierungsstufen 8 bis 11 werden jeweils mit Umfangsgeschwindigkeiten V4 bis V1 angetrieben. Ausgehend von der der Vorpresse 4 am nächsten angeordneten Komprimierungsstufe 8 bis zu der dem Durchlaufofen 5 vorgelagerten komprimierungsstufe 11 nehmen die Umfangsgeschwindigkeiten V4 bis V1 jeweils allmählich ab, so daß sich folgendes Verhältnis ergibt:

$$V4 > V3 > V2 > V1$$

Dadurch wird eine allmähliche Ausbauchung der Fasern der Lage 3 erreicht, was zu einer sehr gleichmäßigen und stabilen Ausrichtung der Fasern beim Durchlauf durch die Einrichtung 7 führt.

Zur Verbesserung der Anpaßbarkeit der Einrichtung 7 an unterschiedliche Fasern und zur Erreichung verschiedener Produkttypen ist jede Komprimierungsstufe 8 bis 11 mit einer in der Zeichnung nicht näher dargestellten Einstelleinrichtung zur Einstellung des Kompressionsgrades versehen.

Ferner ist jeweils zwischen zwei Komprimierungsstufen 8, 9 bzw. 9, 10 bzw. 10, 11 eine Zwischenstufe 16 bzw. 17 bzw. 18 angeordnet, die mit der gleichen Umfangsgeschwindigkeit V*** bzw. V** bzw. V* umläuft, wie die jeweils nachfolgende Komprimierungsstufe 9 bzw. 10 bzw. 11. Diese Zwischenstufen 16 bis 18 weisen außerdem jeweils eine in der Zeichnung nicht näher dargestellte Freilaufkupplung auf. Die Zeichnung verdeutlicht ferner, daß die Zwischenstufen 16, 17 und 18 jeweils zwei Rollen umfassen, die bei der Zwischenstufe 16 mit den Bezugszeichen 19 und 20 versehen sind. Diese Rollen sind wie auch die Rollen der Komprimierungsstufen 8 bis 11 beidseitig der Lage 3 angeordnet und weisen von Zwischenstufe zu Zwischenstufe annähernd den gleichen Abstand zueinander auf. Im Bedarfsfalle wäre es jedoch auch möglich, anstatt der Rollen Förderbänder vorzusehen.

Ferner weist die in der Figur dargestellte Ausführungsform der Vorrichtung 1 ein Überleitband 21 auf, das mit einer Umlaufgeschwindigkeit V1 umläuft und eine große Antriebsrolle 22 aufweist, deren Durchmesser geringer ist als derjenige der Rollen der Komprimierungsstufen 8 bis 11. Ferner ist das Überleitband 21 über eine kleinere Rolle 23 geführt, die im wesentlichen im Einlauf des Durchlaufofens 5 angeordnet ist. Zwischen den Rollen 22 und 23 ist das Band 24 gespannnt, und auf der gegenüberliegenden anderen Seite der Lage 3 ist eine weitere Rolle 25 angeordnet, deren Durchmesser im wesentlichen demjenigen der Rollen der Komprimierungsstufen 8 bis 11 entspricht. Die vom Überleitband 21 gebildete Einrichtung kann auch als Überleitrollenstrecke ausgebildet sein, bei der zwischen den Rollen 22 und 23 Zwischenrollen mit allmählich abnehmendem Durchmesser angeordnet sind. Bei der dargestellten Ausführungsform ergibt sich durch das Überleitband 21 eine plane Anlagefläche an der entsprechend gegenüberliegenden Fläche der Lage 3, was zu einem gleichmäßigen und störungsfreien Einlauf der Lage 3 in den Durchlaufofen 5 führt. Ergänzend ist hervorzuheben, daß die Vorpresse 4 im Beispielsfalle zwei Rollen 26 und 27 aufweist, deren Durchmesser wesentlich größer ist als der Rollendurchmesser der Komprimierungstufen 8 bis 11. Es wird bei der dargestellten Ausführungsform der Vorrichtung 1 eine Dickenkomprimierung erreicht, deren Maße in der Zeichnung mit H0, H1, H2 und H3 bezeichnet sind. Hierbei wird erreicht, daß H0 ungefähr H1, ungefähr H2 und ungefähr H3 entspricht.

Die erfindungsgmeäße Vorrichtung 1 weist den besonderen Vorteil auf, daß durch die Mehrzahl von vorgesehenen Komprimierungsstufen 8 bis 11 eine allmähliche Ausbauchung der Fasern der Mineralfaserlage 3 erreicht wird, was zu einer sehr gleichmäßigen und beständigen Ausrichtung der Fasern innerhalb der Lage und damit zu hervorragenden Produkteigenschaften des Endproduktes führt.

**Patentansprüche**

1. Vorrichtung (1) zum Herstellen von Mineralfaserplatten,

   - mit einer ersten Fördereinrichtung (2) zur Förderung einer Mineralfaserlage (3);
   - einer Vorpresse (4) zur Dickenvorkomprimierung der Mineralfaserlage (3);
   - einem Durchlaufofen (5);
   - einer zweiten Fördereinrichtung (6) zum Transport der Mineralfaserlage (3) durch den Durchlaufofen (5); und
   - einer Einrichtung (7) zur Längskomprimierung der Mineralfaserlage (3) durch wechselseitiges Ausbauchen,
     dadurch **gekennzeichnet,** daß
   - die Einrichtung (7) zur Längskomprimierung eine Mehrzahl von Komprimierungsstufen (8 bis 11) aufweist, die zwischen der Vorpresse (4) und dem Durchlaufofen (5) und in Förderrichtung (F) hintereinander angeordnet sind, und daß zwischen jeweils zwei Komprimierungsstufen (8, 9 bzw. 9, 10 bzw. 10, 11) jeweils eine Freilaufkupplung aufweisende Zwischenstufen (16 bzw. 17 bzw. 18) angeordnet sind, die mit gleicher Umfangsgeschwindigkeit (V3*, V2*, V1*) laufen wie die folgende Komprimierungsstufe (9 bzw. 10 bzw. 11).

2. Vorrichtung nach Anspruch 1, dadurch gekennzeichnet, daß jede Komprimierungsstufe (8 bis 11) Komprimierungselemente (12 bis 15) aufweist, deren Abstand voneinander jeweils annähernd gleich ist.

3. Vorrichtung nach Anspruch 1, dadurch gekennzeichnet, daß die Umfangsgeschwindigkeit (V4 bis V1) von der unmittelbar der Vorpresse (4) folgenden Komprimierungsstufe (8) bis zur letzten Komprimierungsstufe (11) jeweils abnimmt (V4 > V3 > V2 > V1).

4. Vorrichtung nach einem der Ansprüch 1 bis 3, dadurch gekennzeichnet, daß jede Komprimierungsstufe (8 bis 11) eine Einstelleinrichtung zur Einstellung des Kompressionsgrades aufweist.

5. Vorrichtung nach einem der Ansprüche 1 bis 4, dadurch gekennzeichnet, daß die Komprimierungselemente (12 bis 15) von zumindest einem Rollenpaar pro Komprimierungsstufe (8 bis 11) gebildet sind.

6. Vorrichtung nach einem der Ansprüche 1 bis 4, dadurch gekennzeichnet, daß die Komprimierungselemente (12 bis 15) Förderbandpaare sind.

7. Vorrichtung nach Anspruch 5, dadurch gekennzeichent, daß pro Komprimierungsstufe (8 bis 11) eine Mehrzahl von Rollenpaaren vorgesehen ist.

8. Vorrichtung nach Anspruch 6, dadurch gekennzeichnet, daß pro Komprimierungsstufe (8 bis 11) eine Mehrzahl von Förderbandpaaren vorgesehen ist.

9. Vorrichtung nach einem der Ansprüche 1 bis 8, dadurch gekennzeichnet, daß zwischen der letzten Komprimierungsstufe (11) und dem Durchlaufofen (5) ein Überleitband (21) oder eine Überleitrollenstrecke angeordnet ist.

10. Vorrichtung nach einem der Ansprüche 1 bis 9, dadurch gekennzeichnet, daß die Vorpresse (4) zwei Rollen (26, 27) aufweist, deren Durchmesser wesentlich größer ist als der der Komprimierungsrollen.

**Claims**

1. Apparatus (1) for the manufacture of mineral fibre boards, with

   - a first conveying device (2) for conveying a mineral fibre layer (3);
   - a baby press (4) for thickness precompression of the mineral fibre layer (3);
   - a continuous kiln (5);
   - a second conveying device (6) for transport of the mineral fibre layer (3) through the continuous kiln (5); and
   - a device (7) for longitudinal compression of the mineral fibre layer (3) by undulation on alternate sides,

   characterised in that

   - the device (7) for longitudinal compression comprises a plurality of compression stages (8 to 11) which are arranged between the baby press (4) and the continuous kiln (5) and one behind the other in the direction of conveying (F), and in that between every two compression stages (8, 9 or 9, 10 or 10, 11) are arranged intermediate stages (16 or 17 or 18) which each comprise a freewheel coupling and which rotate at the same circumferential speed (V3*, V2*, V1*) as the following compression stage (9 or 10 or 11).

**2.** Apparatus according to claim 1, characterised in that each compression stage (8 to 11) comprises compression elements (12 to 15), the distance between which is in each case almost the same.

**3.** Apparatus according to claim 1, characterised in that the circumferential speed (V4 to V1) decreases each time from the compression stage (8) immediately following the baby press (4), to the last compression stage (11) (V4 > V3 > V2 > V1).

**4.** Apparatus according to any of claims 1 to 3, characterised in that each compression stage (8 to 11) comprises an adjusting device for adjusting the degree of compression.

**5.** Apparatus according to any of claims 1 to 4, characterised in that the compression elements (12 to 15) are formed by at least one pair of rollers per compression stage (8 to 11).

**6.** Apparatus according to any of claims 1 to 4, characterised in that the compression elements (12 to 15) are pairs of conveyor belts.

**7.** Apparatus according to claim 5, characterised in that a plurality of pairs of rollers are provided for each compression stage (8 to 11).

**8.** Apparatus according to claim 6, characterised in that a plurality of pairs of conveyor belts are provided for each compression stage (8 to 11).

**9.** Apparatus according to any of claims 1 to 8, characterised in that between the last compression stage (11) and the continuous kiln (5) is arranged a transfer belt (21) or a transfer roller train.

**10.** Apparatus according to any of claims 1 to 9, characterised in that the baby press (4) comprises two rollers (26, 27) the diameter of which is substantially larger than that of the compression rollers.

**Revendications**

**1.** Dispositif (1) de production de panneaux à base de fibres minérales,

- avec un premier dispositif de transport (2) destiné à transporter une couche de fibres minérales (3);
- une pré-presse (4) destinée à effectuer une pré-compression en épaisseur de la couche de fibres minérales (3);
- un four à passage continu (5);
- un deuxième dispositif de transport (6), destiné au transport de la couche de fibres minérales (3) à travers le four à passage continu (5); et

- un dispositif (7) pour effectuer une compression longitudinale des fibres minérales (3) au moyen d'une ondulation alternée, caractérisé en ce que

- le dispositif de compression longitudinale (7) présente une pluralité d'étages de compression (8 à 11), disposés entre la pré-presse (4) de le four à passage continu (5) et l'un derrière l'autre dans le sens du transport (F), et en ce qu'entre chaque fois 2 étages de compression (8, 9 respectivement 9, 10 respectivement 10, 11) sont chaque fois disposés des étages intermédiaires (16 respectivement 17 respectivement 18) présentant un couplage à défilement libre, défilant avec une vitesse périphérique (V3*, V2*, V1*) égale à la vitesse de l'étage de compression (9 respectivement 10 respectivement 11) qui suit.

**2.** Dispositif selon la revendication 1, caractérisé en ce que chaque étage de compression (8 à 11) présente des éléments de compression (12 a 15), dont l'espacement mutual est chaque fois à peu près égal.

**3.** Dispositif selon la revendication 1, caractérisé en ce que la vitesse périphérique (V4 à V1) diminue, depuis l'étage de compression (8) qui suit directement la pré-presse (4), jusqu'au dernier étage de compression (11) (V4 > V3 > V2 > V1).

**4.** Dispositif selon l'une des revendication 1 à 3, caractérisé an ce que chaque étage de compression (8 à 11) présente un dispositif de réglage destiné a régler le degré de compression.

**5.** Dispositif selon l'une des revendications 1 à 4, caractérisé en ce que les éléments de compression (12 à 15) sont formés par au moins un couple de rouleau par étage de compression (8 à 11).

**6.** Dispositif selon l'une des revendications 1 à 4, caractérisé en ce que les éléments de compression (12 à 15) sont des couples de bandes transporteuses.

**7.** Dispositif selon la revendication 5, caractérisé en ce qu'une pluralité de couples de rouleaux est prévue pour chaque étage de compression (8 à 11).

**8.** Dispositif selon la revendication 6, caractérisé en ce qu'une pluralité de couples de rouleaux est prévue pour chaque étage de compression (8 à 11).

**9.** Dispositif selon l'une des revendications 1 à 8, caractérisé an ce qu'entre le dernier étage de compression (11) et le four à passage continu (5) est disposée une bande de transition (21) ou un tronçon de transition à rouleaux.

**10.** Dispositif salon l'une des revendications 1 à 9, caractérisé an ce que la pré-presse (4) présente deux rouleaux (26, 27) dont la diamètre est sensiblement supérieur a celui des rouleaux de compression.